# EUROPEAN PATENT SPECIFICATION

(11) **EP 1 650 932 B1**
(45) Date of publication and mention of the grant of the patent: **02.06.2010**
(21) Application number: 04025084.7
(22) Date of filing: 21.10.2004
(51) Int. Cl.: H04L 29/08

(54) **Information system for supplying a prescribed region with information**
Informationssystem zum Bereitstellen von Informationen für ein vorgegebenes Gebiet
Système d'information pour la fourniture d'information à une région prescrite

(43) Date of publication of application: 26.04.2006
(73) Proprietor: Sennheiser electronic GmbH & Co. KG, 30900 Wedemark (DE)
(72) Inventor: Hilbich, Norbert, 31535 Neustadt (DE); Grotelüschen, Enno, 29221 Celle (DE)
(74) Representative: Eisenführ, Speiser & Partner

(56) References cited:
- WO-A-00/19642
- WO-A-02/058426
- US-A1- 2001 036 224
- US-A1- 2002 069 243
- US-B1- 6 601 012

## Description

The invention relates to an information system for supplying a prescribed region with information, a method for supplying a prescribed region with information, and a hand-held appliance for receiving, storing and reproducing information in an information system

DE 35 33 705 discloses a wireless information transmission system for exhibitions and museums. In the case of this system, first infrared transceivers are arranged on or in the vicinity of exhibits in an exhibition. These infrared transceivers have associated memories which contain selectable, multi-channel sets of information, which can be controlled by sensors, in a plurality of languages about the respective exhibit in the exhibition.

In addition, a (variable-location) second infrared transceiver to be carried by a visitor is part of the system. When the visitor moves from the position of one exhibit to the position of another exhibit in the exhibition, the second infrared transceiver retrieves the appropriate set of information about the exhibit in the exhibition. During operation of this information transmission system, the first infrared transceivers are supplied, by means of sensors, with code signals via a code generator arranged in the second infrared transceiver, said code signals being triggered by the visitor using a start/stop switch and selectively activating audio and/or visual reproductions of exhibit-specific or general information from overall information contained in the memory, or controlling programmed information cycles.

German Patent Specification DE 35 35 715 discloses a method for transmitting exhibit-specific information to visitors at exhibitions and museums. This method involves the visitor carrying a reproduction appliance, and the respective exhibit having an associated information appliance. An information transmission link exists between the information appliance and the reproduction appliance. The exhibit-specific information is digitally stored in the information appliance associated with the exhibit and is available for retrieval. The reproduction appliance comprises a buffer store, a digital-analogue converter and at least one electro-acoustic transducer or an appropriate means of connection. When exhibit-specific information needs to be reproduced, the visitor briefly sets up a data link between the reproduction appliance and the information appliance, so that the appropriate information can be transferred during the brief time for which this data link is set up. This information is then converted into audio signals and is reproduced, the time required for data transfer is shorter than the time required for audio reproduction.

DE 35 17 818 discloses a method for reproducing object-specific information reproduced by a hand-held appliance which selects it from previously stored information when a code is received.

In all of the above systems, the user carries a portable reproduction appliance which can be used to reproduce information about particular objects, exhibits or the like. In some cases however, the user first needs to have the desired information transmitted to his reproduction appliance at the position of the object. To this end, the reproduction appliance is coupled briefly to a memory device arranged in the vicinity of the object, and the desired information is transmitted from the memory device to the reproduction appliance. The user therefore always needs to set up a data transmission link before the desired information can be reproduced by the reproduction appliance. An infrared data transmission link or preferably a RF transmission link, so that problems on account of wear and complicated operation are avoided, in particular. However, a related drawback is that the user needs to be in the vicinity of the appropriate infrared or RF transmission device in order to transmit the desired information, and needs to stay there until transmission is complete.

EP 198 44 809C1 discloses an information system which comprises a transmission device for transmitting information in digitally coded form and a hand-held appliance which comprises a reception device for receiving the information transmitted by the transmission device, a digital memory device for storing the received information, which is preferably fitted undetachably in the reception device, a reproduction device for reproducing the stored information, particularly audibly and/or visually, and an event recognition device for recognizing particular events, where, upon recognition of an event, the information associated with the recognized event is selected from the stored information for the purpose of reproduction.

It is therefore an object of the invention to provide an information system for supplying a prescribed region with information and a method for supplying a prescribed region with information, with additional improved features.

This object is solved by an information system according to claim 1, 22 and 28, a method for supplying a prescribed region with information according to claim 11 and a hand-held appliance according to claim 21.

Therefore, an information system for supplying a prescribed region with information comprises at least one transmission device for transmitting information in digitally coded form, and at least one hand-held appliance. Said hand-held appliance comprises a reception device for receiving the information transmitted by the transmission device, a digital memory device for storing the received information, a reproduction device for reproducing the stored information, an event recognition device for recognizing particular events which, upon. recognizing an event, selects from the stored information the information associated with the recognized event for the purpose of reproduction, and a statistics managing unit for accumulating and for managing data with regard to recognised events and the handling of said hand-held appliance within the prescribed region.

According to an aspect of the invention said statistics managing unit comprises a visitor statistics unit for generating a visitor profile according to recognised events and the performance of said hand-held appliance. The idea behind the visitor profile is to generate information for the visitor about his visit to the prescribed region and the events he has contacted/he listened to.

According to a further aspect of the invention said statistics managing unit comprises an operator statistics unit for generating an acceptance profile of events recognised by said hand-held appliance. The idea of this profile is to get details on the events in the prescribed region and their acceptance by the visitor. This may be used by the marketing department for more detailed profile of the visitors as well as by the designers to optimise the facilities of the system.

According to still a further aspect of the invention said statistics managing unit comprises a technical statistics unit for generating a system performance profile according to the recognised events and handling of said hand-held appliance. The system performance profile provides details for the technician about the performance of the complete system. Accordingly, on the basis of this information, the technician can optimise the installation and is able to follow up complains from the visitors regarding the performance of the system.

The invention also relates to a method for supplying a prescribed region with information, in which information in digitally coded form is transmitted by a transmission device and is received by a reception device contained in a hand-held appliance and is stored in a digital memory device in the hand-held appliance, where, upon recognition of an event, the information associated with the recognized event is selected from the stored information for the purpose of reproduction. Additionally, data with regard to recognised events and the handling of said hand-held appliance within the prescribed region is accumulated and managed.

The invention also relates to a hand-held appliance for receiving, storing and reproducing information in an above information system. Said information system comprises a reception device for receiving digitally coded information, a digital memory device for storing the received information, a reproduction device for reproducing the stored information, particularly audibly and/or 30 visually, and an event recognition device for recognizing particular events which, upon recognizing an event, selects the information associated with the recognized event from the stored information for the purpose of reproduction, and accumulates and manages data with regard to recognised events and the handling of said hand-held appliance within the prescribed region

The invention is based on the idea to provide a statistics manager accumulate statistic information in a receiver. The statistics manager accumulates data of all events which have been encountered by the receiver as well as the behaviour of the receiver/activities of the user. The accumulated data can be analysed with regard to information for visitors, to information on installed events and the acceptance thereof, and information of the system performance.

The invention is furthermore related to an information system for supplying a prescribed region with information. Said information system comprises at least one transmission device for transmitting information in digitally coded form, at least one hand-held appliance comprising: a reception device for receiving the information transmitted by the transmission device, a digital memory device for storing the received information, a reproduction device for reproducing the stored information, an event recognition device for recognizing particular events which, upon recognizing an event, selects from the stored information the information associated with the recognized event for the purpose of reproduction, and an announcement managing unit for sending announcements to selected hand-held appliances within the prescribed region wherein the reproduction device reproduces said announcements. The announcement managing unit allows to address specific hand-held appliances as long as they are in prescribed region.

The invention moreover relates to an information system for supplying a prescribed region with information. Said information system comprises at least one transmission device for transmitting information in digitally coded form, at least one hand-held appliance comprising: a reception device for receiving the information transmitted by the transmission device, a digital memory device for storing the received information, a reproduction device for reproducing the stored information, an event recognition device for recognizing particular events which, upon recognizing an event, selects from the stored information the information associated with the recognized event for the purpose of reproduction, and a monitoring managing unit for monitoring the positions of at least one hand-held appliance in said prescribed region according to predetermined conditions. The monitoring managing unit allows to monitor the position and the movement of specific hand-held appliances within the prescribed region.

Further aspects of the invention are described in the dependent claims.

The invention and the embodiments thereof are now described in more detail with reference to the drawings, in which:
- Fig. 1: schematically shows a region which is supplied with information,
- Fig. 2: shows a schematic design of a hand-held appliance,
- Fig. 3: shows a block diagram of the control device in the hand-held appliance of Fig. 2,
- Fig. 4: shows a block diagram of an announcement managing unit ANM according to a second embodiment, and
- Fig. 5: shows a block diagram of a monitoring managing unit MMU according to a third embodiment.

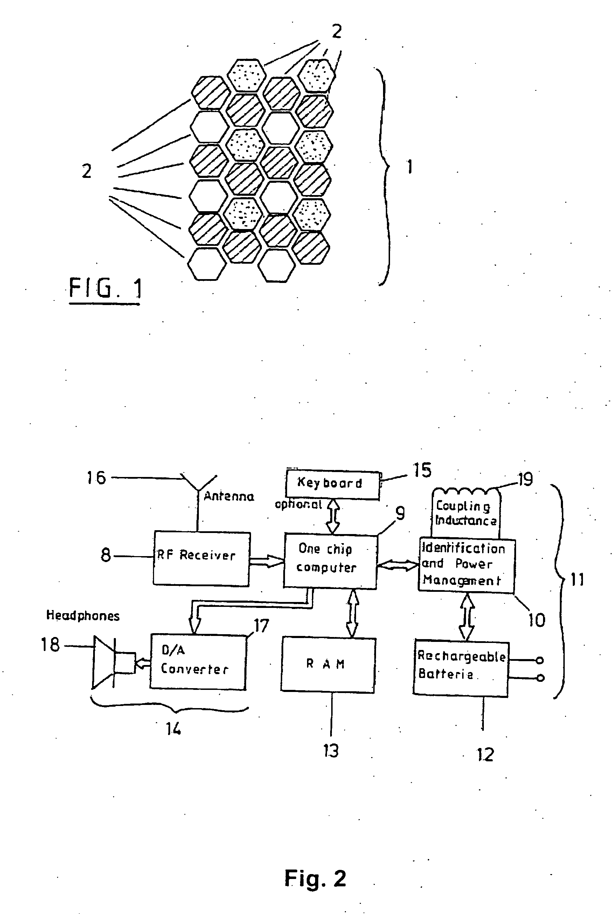

Fig. 1 schematically shows a region 1, for example a town, an airport, a trade fair site, a museum etc., which is supplied with information by the information system. In this case, the region 1 can be split into a plurality of information islands 2 which each have an associated transmission device.

First of all, the general environment of the information system is described in more detail. The boundaries between adjacent information islands are stipulated, in particular, by limiting the respective transmission devices' transmission power, by a prescribed antenna characteristic for a transmission antenna and/or by influencing the wave-propagation behaviour, for example using screens etc. In addition, the transmission devices in adjacent information islands operate at different frequencies and/or using different (source and/or channel) codings.

The transmitted information is split into individual information contributions which are, by way of example, documentation relating to individual objects at particular positions, general background information, personal messages or information transmitted live, particularly announcements, warnings, music programmes etc.

The information which a user of the information system can access using a hand-held appliance is subdivided, according to its availability, into various groups which are transmitted using different transmission modes. In this context, a distinction is drawn between event-controlled or position-related information, live information and personal information.

Event-controlled or position-related information is of interest to the user at particular positions, e.g. information about other transport options when the user is in the arrivals hall at an airport, information about an exhibit, directly next to said exhibit, in a museum, or information about a trade-fair stand at its exact position.

Such information is disseminated only by the transmission device for that information island which contains the corresponding position to which the respective information contribution relates. The individual information contributions are transmitted repeatedly and are stored in the hand-held appliance in an integrated memory device, position-related information already stored beforehand in other information islands may be replaced with the current information. All position-related information contributions for an information island in which the user with the hand-held appliance is located are stored at least in part, where possible in full, even if they are not being reproduced until a later time or perhaps even not at all.

In this context, the information is transmitted many times faster than it is reproduced by the reproduction device. The constant repetition and the short transmission period for the information ensure that, shortly after entering an information island, a user has stored all the position-related information in his hand-held appliance for subsequent retrieval.

Despite the much faster transmission of the information as compared with reproduction thereof, it takes a certain period of time before all the information contributions for an information island have been stored in the hand-held appliance and are thus available for direct reproduction. The period of time which elapses before a user has a particular information contribution ready for reproduction can be reduced by virtue of the respective initial sections of the individual information contributions being transmitted more often, i.e. at shorter intervals of time, than the remaining final sections. After a comparatively short period of time, the initial sections of all information, contributions for an information island are thus ready for reproduction. During reproduction of an initial section of an information contribution, the hand-held appliance can then load the remaining final section of the information contribution, so that the final section can be reproduced directly after the initial section. This provides the user with the impression of a continuous information contribution (programme contribution) without any interruptions. This method therefore significantly shortens the "waiting time" for a particular information contribution, ideally to less than 1 second and hence to shorter than the user's reaction time.

The object related information may also be prestored in the hand-held device so that it can be reproduced in an area where there may be no link to the transmission system to download the object related information.

If the storage capacity of the information memory device integrated in the hand-held appliance is not sufficient to store all the position-related information contributions for an information island and for a language, then, particularly for longer information contributions, only initial sections are stored in each case. The whole information contributions are reproduced as illustrated above.

In addition, the hand-held appliance may comprise a position-finding device. The position-finding device receives external signals for finding the position. This encompasses both the use of navigation systems and the option of position-finding by distributed signal generators transmitting position identifiers. In this case, the signal generators can be arranged at the appropriate positions for which information contributions are transmitted or so as to be distributed evenly in the information island. For the purpose of position-finding or as a triggering event for reproducing position-related information, position identifiers are transmitted to the hand-held appliance by induction loops, inductive tags or infrared transmitters, for example.

The ascertained, current position or the received position identifier is used to select appropriate position-related information which is then reproduced for the user either automatically or following manual.

Live information is understood to mean such information contributions as are current at a particular time and for which storage is therefore inappropriate. Such information is transmitted with the shortest possible time delay and can be made accessible to the user directly (live) - accordingly, the live information is not buffer-stored.

This group of information includes, by way of example, radio programmes (including those with digital data programming, e.g. DAB, MPEG audio, AC3 etc.), dubbed versions of films or presentations currently taking place, advertising, messages about special offers or opportunities, news, weather forecasts etc. However, it also includes cross-island advice, such as a fire alarm, which can be sent with a higher priority, so that it can be registered immediately by all users. The information system can be set up such that different live information is available on a plurality of channels simultaneously - in each case in all languages which are offered.

In this context, live information falls into two categories which place different transmission demands on the information system. A first category is formed by live information, which involves the user seeing visual information, for example a video film, simultaneously. This first category of information (presentation mode) generally arises locally in an information cell and is thus supplied locally and transmitted directly by the respective transmission device. For information in the first category, the time delay between the visual information and the corresponding audio information needs to be below 15 (30) ms in order to achieve "lip sync".

A second category (broadcast mode) is formed by live information which comprises just audio information, such as radio programmes, where no "actor" can be seen. Such information is normally disseminated via a network to all information islands, where it is broadcast. The demands on transmission of the information in the second category are not as rigorous; delays in the range of seconds are permissible.

Personal information always relates to just one particular person, and also just this person is intended to receive the message. In terms of operation, this transmission mode corresponds to that of a conventional "pager" system. Information contributions from this group are generally transmitted just once, but expediently in the entire region, that is to say in all the information islands, in order to ensure that the person addressed receives the information. However, it can also be expedient to buffer store the personal information in order to be able to transmit it repeatedly. To be able to perform addressing more easily, each hand-held appliance should have an individual identifier, and an association between the hand-held appliances and the users should be known. Alternatively, also groups can be addressed.

In addition, audio information can be transmitted using different bandwidths and dynamic ranges. Likewise transmitted control information for identifying the received information can be used for correctly converting said received information back into analogue audio signals, according to its format.

Fig. 2 shows the schematic design of a hand-held appliance 11 having a reception device 8, a control device 9, a power-supply device 10, a (rechargeable) battery 12, an information memory device 13 and a reproduction device 14. Optionally, the hand-held appliance 11 can have a keyboard 15 which is connected to the control device 9.

Firstly, the general operation of the hand-held appliance 11 is described in more detail. The reception device receives an RF signal via a connected reception antenna 16 and converts the received RF signal into a digital data stream which is subsequently processed by the control device.

The control device 9, which can be formed by a one-chip computer or a DSP (Digital Signal Processor), identifies the received information and processes it accordingly on the basis of type and priority. By way of example, position-related information is stored in the information memory device, while live information is not stored or is stored only briefly for a few seconds or minutes; if live information with high priority, for example a warning, is received, then the information contribution currently being transmitted to the user is interrupted and the information with high priority is reproduced directly.

Another task of the control device 9 is to make the position-related information stored in the information memory device 13 available for reproduction on the basis of the current position. The reproduction device comprises a D/A converter 17 for the purpose of converting digitally coded audio information into an analogue signal. The analogue signal is then supplied to a loudspeaker 18, to headphones, to appropriate connections or to an induction loop for hearing aid etc.

The hand-held appliance can be supplied with power by means of primary cells. However, rechargeable batteries provided in the hand-held appliance are more economical. In order to be able to charge rechargeable batteries, the power supply device 10 contains charging contacts which can be used to connect the hand-held appliance 11 to an external power source.

The hand-held appliance also comprises an element 19 for inductive coupling, which is an interface to external magnetic fields. This coupling element 19 is used in order to pick up the position information transmitted by induction loops. The position identifier ascertained in this manner, which can alternatively also be input using the optional keyboard or can be picked up by an infrared interface (not shown), is used by the control device 9 in order to find the desired information contribution in the information memory device. Any other coupling, e.g. capacitive, transponder, electromagnetic, optical etc., is possible.

If only small charging currents are required for the rechargeable batteries, then the element for inductive coupling can also be provided in the power supply device 10. It would then be possible additionally to use the element to pick up power for the hand-held appliance's rechargeable battery with DC isolation from a corresponding charging station.

The hand-held appliance 11 can additionally comprise a device for storing an identifier information for the positions visited by the user and/or for the reproduced information contributions. The identifier is used to record what length of time the user has spent at a particular position, for example. Alternatively, it is possible for the user to use an appropriate interface to output a value assessment relating to the quality of a position or information contribution, which is likewise stored. When the user leaves the region of the information system or returns the hand-held appliance, the stored data can be read and used for statistical purposes. These data are expediently combined in an output file which can be read in and processed further by an external data processing device.

At short range, the information can be transmitted using an IR (infrared) interface provided in the hand-held appliance 11. This can be used either as a substitute or in addition to an RF (radio frequency) reception device. In addition, small volumes of data can also be radiated by the magnetic loops and can be transmitted to the hand-held appliance by means of the element for inductive coupling.

In one alternative embodiment, it is even possible to dispense with the RF reception device completely. The necessary data can then be transmitted to the hand-held appliance either using the IR interface described above or, when charging the batteries, using the charging contacts and a corresponding data reception device provided in the power-supply device. In such an embodiment, the full RF infrastructure is not necessary, which means that such an information system can be constructed very economically. Appliances each can be equipped with a transmission device which automatically emits identification pulses at a prescribed interval of time. Such a transmission device can operate, by way of example, using RF or IR signals. In addition, corresponding reception devices which pick up the identification pulses and forward them for processing then need to be distributed and networked in the region of the information system. Appropriate information transmitted to the users can then be used to control or at least to influence the users' movements in the region.

It may also be a mixture of both: prestored data in the hand-held device and the changes in an installation are transmitted via RF to the hand-held so that old information is exchanged.

If the hand-held appliances are equipped with a transmission device as described above and if corresponding reception devices are distributed in the region, these devices can also be used actively by the user. This allows the user to start or control equipment, for example, or to take part in a ballot wirelessly.

The user can use the hand-held appliance with a special transmission device outside of the information system as well, for example in his private environment, and with particular advantage as wireless (digital) headphones.

The hand-held appliance, i.e. the receiver, may have certain buttons for controlling its function. These buttons may be STOP, REPEAT, + (VOL+), - (VOL-). In addition one or more light emitting diodes LED may be provided.

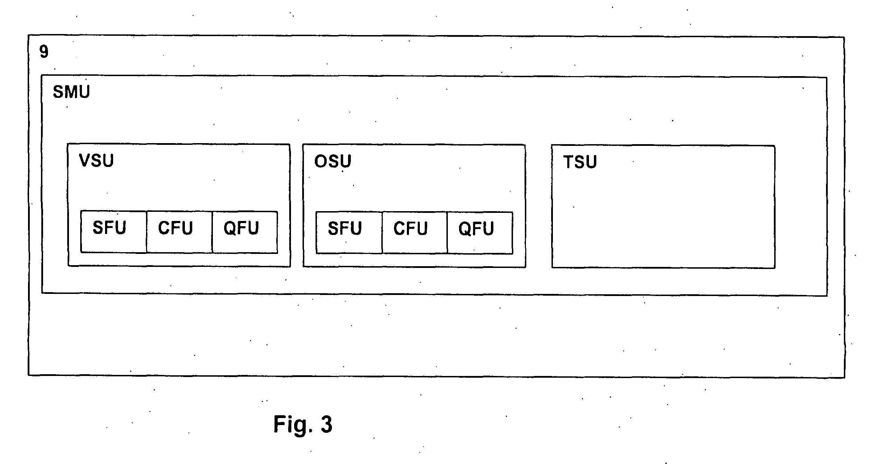

Fig. 3 shows a schematic design of the control device in the hand-held appliance of Fig. 2 according to a first embodiment. Said control device 9 comprises a statistics managing unit SMU with a visitor statistics unit VSU, an operator statistics unit OSU and a technical statistics unit TSU. The visitor statistics unit VSU and the operator statistics unit OSU may each comprise a shopping function unit SFU, a competition function unit CFU and a questionnaire function unit QFU.

First of all, the overall operation of the statistics managing unit SMU is described. The receiver, i.e. the hand-held appliance, is accumulating data regarding the contacted identifier and the action of the receiver itself while being taken through the installation. Such data may include the time, the date, the position, the contacted identifier, and/or the actuation of the buttons of the hand-held appliance The statistics managing unit SMU may implement three different statistics, namely a) a visitor statistics designed for the visitor to take home, b) an operator statistics for displaying the acceptance of the installation, and c) a technical statistics for controlling the system performance of the installation.

The visitor statistics unit VSU generates information for the visitor of his visit of the facility and the events he has contacted/he listened to. The operator statistics unit OSU accumulates details on the installed events and their acceptance through the visitor. This may be used by the marketing department to get a more detailed profile of the visitors as well as by the designers to optimise the facilities. The technical statistics unit TSU generates details for the technician about the performance of the complete system including the installation. The behaviour of the receiver is monitored (detecting identifiers, RF reception/number of downloads, actuation of the buttons etc.) as well as the installation itself, this may be used by the technician to optimise the installation and to follow up complains from the visitors about the performance of the system.

Visitor terminals are arranged in the exhibition, preferably at the exit of the exhibition. The visitor statistics unit VSU accumulates information for the visitor of his visit of the facility and the events he has contacted/he listened to, in order to generate a visitor profile which is specific for each visitor and his actual visit. At the visitor terminal, the visitor profile, i.e. specific data about the visitor, can be programmed either through the operator or the visitor himself. Certain fields of the visitor profile are mandatory (like category), but the operator can define these 'must' inputs before a visitor profile of the receiver is programmed and the receiver is handed out. There may be more than one hand out point being next to each other or in different locations. The visitor profile may be designed with different input fields. The operator can define the number of fields as well as the content thereof like Name, Address, Country, male, female, date of birth, single, family, group, category etc. It is preferable to have fields for different price levels like Adults, Seniors, Students, Child, Group, Complimentary (free of charge) as this is important for rental companies to have this information to invoice the customer.

These fields can be filled at the hand out point by the people on duty or by the visitor himself. In the second case a machine will hand out the receiver after successful data input. At a complete automatic hand out the credit card can be used for the input of certain data for the actual billing method

The visitor profile may offer a field in which non existing categories can be requested. Hitting this field will show the inputs so far in a list. With a double click an a existing category a counter is set an digit higher. Non existing categories can be typed in manually.

The visitor can choose between different tours (categories) according to the time he has or the objects/topics he would like to listen to. He can book into special events at fixed time, and the system checks and reserves a seat. The system will remind him 10 and 5 minutes prior to the event and gives navigation assistance.

Before leaving the exhibition the visitor may go to a visitor terminal to pick up information about his tour in the facilities. This terminal usually is a bit off from the exit in order not to block that section. Several terminals may be installed. They may be unmanned and can be checked once per day. They are linked to a network in order to be checked via the network and send out alarms if there are malfunctions like no paper/toner etc.

A visitor terminal has a slot for one receiver. Inserting the receiver will start the readout process. This may take approximately 5 seconds. If there is only one function active, like print out, this one will be started automatically. If there is multiple choice the visitor is asked to make his decision, namely to print out of the visited highlights and/or the not contacted highlights, to type in an e-mail address to send it home, to printout an actual map of the facilities with the personal route, to handout or key in password to access the tour later from outside, or to burn a CD ROM with tour details and not contacted highlights.

The visitor terminal will record the activities and can assign this to the visitors profile. The software on all terminals in public area must be protected against vandalism.

The print out of the visited highlights, may include category specific pages. These pages have gaps into which details of the visitors tour can be printed: date, Sir /Madame, visited highlights of the tour. The operator may define a number of events and declare them as highlights. Out of those given highlights a smaller, limited number can be printed on a given space on the handout for the visitor. If the number of highlights is smaller than the given limit, only those are printed. If no defined highlight was contacted a special statement can be printed. The visitor statistics unit VSU compares the visited highlights with the total number of defined highlights. Out off those which do not match, the system will pick a limited number and print it into another given gap ('you have not seen..., please come again').

When an e-mail address is typed in, the same process for the print handout will be performed, however without a print out. The information package is send to the e-mail address that is keyed in. The system will ask, whether the visitor allows to store the address and keep him updated about the events in the visited facilities. If the answer is 'yes' address will be stored.

Furthermore, a printout of the actual map of the facilities with the personal route may be handed out. The statistics managing unit SMU may store a map of the site with the points of information and the system prints the actual route of the visitor reconstructed according to the data accumulated by the statistics managing unit SMU. Alternatively, the map may also be stored somewhere in the network. The operator can import one or more maps of his facilities into the statistics program and set the positions of the identifiers on these maps. The statistics manager will link the identifiers according to the movement of the visitor. As an option this map function will take care of the paths and walls of the facilities and adapt the movement to the display in a more realistic way.

Moreover, the visitor terminal may output a password to the visitor or the visitor can enter a password to access his tour from outside and download it to his own PC.

In addition, a pre-produced CD ROM may contain all events of the exhibition in all categories or one CD ROM is provided for each category. The CD will be configured through the receiver of the visitor: he will see the highlights of his tour. In a second section he will see the events that he has not contacted. If the CD ROM is free of charge it can be handed out at the visitor terminal. If not at the souvenir shop. This CD ROM differs from the usual CDs one can buy at a souvenir store as it is personalized through the way the visitor has passed through the exhibition. Alternatively, this may be achieved by providing a specific code to the visitor with which only those events and information can be accessed which the visitor has visited.

The shopping function unit SFU in the visitor statistics unit VSU or in the operator statistics unit OSU is provided to gather all necessary data for purchases within the exhibition. For certain events within the exhibition special detailed printed information, or a replica, souvenirs may be available. At those events the visitor is asked to press a specific button on his receiver if he is interested to buy, take home, mail, pick up through internet, burn an CD ROM this information. For the time in which this select function is active a red LED is blinking fast - so one of the existing buttons may be used to agree (Vol+ to agree, no additional button required). If the information is for free, it should be printed out at the visitor terminal or mailed to the address of the visitor or he can pick it up from the internet (under his mail address, name or with a special password). If he has to pay for that information a remark should come at the visitor terminal to pick it up at the souvenir shop or he is asked to go direct to the shop.

In other words, a message like '....for this exhibit we have prints. If you like to pick one at the exit please press the button + now.' may be associated to an event. The red LED will flash fast for the time when the input is accepted, pressing + stops the flashing, and the input is accepted. Pressing nothing or - will be accepted for input not accepting the offer. The input can be active for a defined number of seconds. The next event (identifier) will stop the input as well as pressing any button except +. At the visitors terminal the visitor may receive the extra information which he has ordered as paper or as file to be send to his e-mail account or he can have access to this information from his home by setting a password for the access at the visitor terminal. If the picked items are not free of charge he may pick it at the shop. The procedure is in general the same as at the visitor terminal - the receiver data activates the order - this time the shop keeper collects the money.

Additional services can be offered for the visitors such like shopping function, competition, questionnaire (more details will be described below). Activated through a 'special storage event' that announces the services and starts the function for a defined time frame the visitor can agree to take this service or not.

At the souvenir shop another terminal will do the readout of the receiver again, and the order process may be started. The shopkeeper will sell the ordered information package.

For this function the existing buttons Vol+ and Vol- may be replaced by a big + and a big - (to be more neutral), which can be referred to as the + and - button. Volume may be printed between these buttons. The function of these buttons may vary depending on what is activated by the operator. For the time where these buttons are active the red LED flashes fast. An input, a new event, an identifier, may stop that function.

In the competition function unit CFU categories may be generated for a specific category, (not only) for kids where they are asked questions during their tour. If they agree to a given statement they are asked to press a certain button, if not a different button. The questions as well as the answers are accumulated in the competition function unit CFU. The question may be stored in the hand-held appliance when it is personalised and handed out or they may be transmitted to the hand-held devices.

At the visitor terminal for those competition categories an extra file is generated to give the result of the competition for the different statements and in the end the total number of achieved points. The number of achieved points can be linked to one statement out off a number given statements for the achieved amount of points (it can be defined: random function will pick the statement or it will follow according to the order). For example, 10 different Statements per achieved amount of points or range of achieved amount of points may be possible. A print out for the leader or the group running the competition with the average amount of points per statement can be given as well as the total average.

The questionnaire function unit QFU operates similar to the competition function unit CFU, but it is for internal use (operators statistics) and will not require a printout for the visitor. A statement at the visitor terminal can be activated to thank for taking part in this questionnaire.

During the check out procedure the visitor needs at the return of the equipment and a written statement for a proper return at his hand-held device, if the configuration of the receiver is done through the visitor on his own and the credit card number is taken as deposit checkout. Here, security and reliability has top priority.

If the visitor keys into the exhibition with his name for an additional visit, it should be possible to welcome him. Regulars (holiday ticket, one year ticket) can get a special welcome through this feature. The operator can define for how long the accumulated detailed data should be stored for this or similar/additional service purposes.

When returning the receiver into the charger after the tour the readout of complete operator statistics as generated by the operator statistics unit OSU from the receiver will be started automatically.

In order to assign events and statistics properly, the name of the installation to which this statistics refer has to be imported into the statistics profile with the events and their characteristics. A standard profile for the readout and display has to be part of the statistics manager and is described in the following. All data collected by the receiver should be accessible for the operator in a form that he or other parties can design their own style for the readout. Starting the statistics program the user will have the choice to activate different functions (readouts) or a combination of those.

The operator statistics profile may contain a field regarding the use of the receivers. This field will show how many receivers were used during a particular day. It will show the total amount of the used receivers (all receivers that were taken out off the charger that day). Besides that the use of the receivers according to given time slot can be displayed. The timeslot itself can be defined by the operator (receivers that were taken off the charger, but not used in the installation can be identified). This function can be used by rental companies for the invoicing process of their customers.

The name of the installation (with it's characteristic number of events, length of text etc.) may be shown on top The statistics managing unit SMU will take these details of this installation as base for it's calculation. The actual date shows the date of the read out. A period of time can be selected and a similar printout can be achieved. Furthermore, a time period is selected and a total sum is calculated for the time period. The receiver serial numbers that were used during the single day or within the given time period can be extracted. If the time period is activated multiple use of receivers are displayed. The operator can define a time slot in minutes for the read out of the used receivers. So he may find receivers that were taken out off the charger, but made no tour through the installation. This profile also gives an indication on the average time a visitor spends in the installation.

The operator profile also shows the use of the categories. On top the name of the installation is provided (with it's characteristic number of events, length of text etc.). The statistics managing unit SMU will take these details of this installation as base for it's calculation.

The actual name of the categories may be taken out of the real installation. An additional column may be added to show the average time that a receiver is used in the different categories. The Average (Average time in minutes) of 'All Categories' is weighted according to the number of visitors in the different categories.

The acceptance of events can be included for all categories as well as for single categories. One specific day can be set or a period of time. The operator profile may include the event number, event name, event mode, event time (in seconds). For RTA or not clearly defined events (restaurant, park, shop) the operator can set a standard time in seconds. A 'Completed'-field may contain how many receivers completed the event, and listened to the complete audio file. The average active time takes into account those that listened not to the complete event, and may include the average time of all those that cut off before the end of the event.

The average time field between the events gives an information about the time form starting one event until detecting the next event. A pause field represents a calculation of average time between two events minus playtime of the first event. This is an indication for events of high interest, since people will linger on for a longer time. A field 'Listening Acceptance' shows how the event is accepted by those visitors that contacted the event. 100% would represent, that all visitors which have contacted this event have listened to the end of the text file. This is a relative read out. A field %full indicate how many visitors that have contacted that event listened to the complete text. A field %part indicate how many visitors went off - contacted a different event - or pressed Stop before the text was finished. A field contacts represents the number of receivers that actually contacted the event. A field Contacts -Acceptance' represents how many visitors have contacted the event. The basis for the calculation is the amount of receivers that were in use that day, i.e. 100% = all receivers of that day.

Further details on the acceptance of the events and their adjustments can be provided through an indication of the use of the buttons STOP, REPEAT, VOL+, VOL-.

In a special section of the visitor profile it should be possible to set up a name list with certain personal data (Fitness studio). Each time the visitor enters an exhibition a receiver can be assigned to one name. After the tour data is stored under this name. Statistics can be done for each name. Number of visits, Minimum, Maximum and Average time per visit is shown as well as contacts per event with average time and minimum and maximum time. Read out of data can be done for single receivers according to serial number. Background of this is to check the activities of the user for specific days and for a given period of time.

The operator can import one or more maps of his facilities into a special section of the statistics program and set on these maps the positions of the identifiers. The statistics managing unit SMU may link the identifiers according to the movement of the visitor. The thickness or colour of the link indicates the amount of visitors that have taken this way. It shows the flow of the visitor, possible areas where it may get crowded. As an option this map function will take care of the paths and walls of the facilities and adapt the movement to the display in a more realistic way. This function should be based an architectural drawings generated in AutoCAD. Besides the thickness the link between events may also be coloured to indicate the use of the way between the events. As an option different colours can be used for different categories to indicate the preferences of the users.

A competition function unit may include a field 'Average collected points' representing the average out off all the questions that were ask in the installation. A check for acceptance, as well a check for the level of that competition may be performed.

The questionnaire function unit QFU is similar to shopping function unit, but it is for internal use (Operators Statistics) and will not require a printout for the visitor. A statement at the visitor terminal can be activated to thank for taking part in this questionnaire.

The technical statistics unit TSU is designed for controlling the system performance of the installation: With a special command the technician can get from single receivers details of it's behaviour in the installation, like taken out off the charger, wake up, detecting installation code etc.

This detailed readout may take more time than the readout of the normal statistics. The technician will get data with certain explanation to monitor the performance of the whole system. With the help of these details the technical part/performance of the installation and it's components can be optimised and controlled. The technical statistics is designed for technicians only.

Another aspect of the information system is the authorizing Procedure. This may be performed on a software basis. In addition, a dongle to activate the statistics managing unit may be provided.

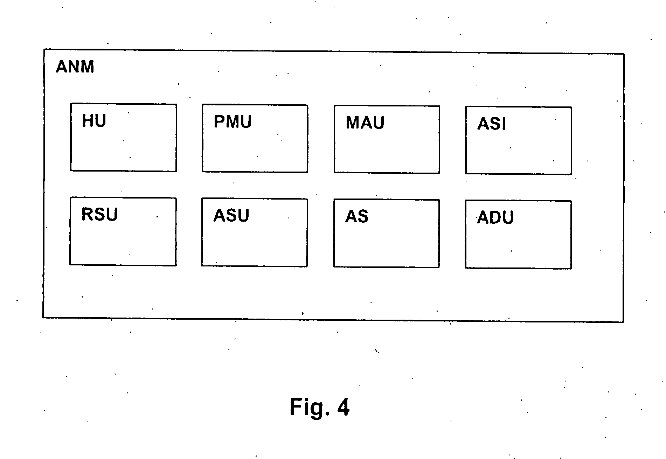

Fig. 4 shows a block diagram of an announcement managing unit ANM as part of an information system according to a second embodiment of the invention. Said announcement managing unit ANM comprises a history unit HU, a pending announcement unit PAU, a muting activation unit MAU, an acoustic signal initiating unit ASI, an announcement storage unit ASU, an announcement display unit ADU, a receiver select unit RSU, and an area select unit AS.

The announcement managing unit ANM is not designed to substitute emergency systems that are required for certain buildings, but can support/assist systems like that. The announcement managing unit ANM allows to address visitors in the installation as long as they are in range of an antenna. The length of an announcement may be limited to 30 seconds. However, the announcements may be longer.

Through the area select unit AS an announcement can be addressed to all areas of the exhibition or to selected areas. The announcement can be send out a single category or to selected categories or to all categories or to one or different groups or to a single person.

In the announcement storage unit ASU pre-recorded sound files, which can be imported and assigned to the addressees, are stored. Besides that sound files can also be recorded through the announcement managing unit AMN. If the announcement managing unit AMN is implemented on a computer, such a computer needs a soundcard and a standard microphone. A user surface similar to that of a tape recorder can assist in the recording process. A bar shows the elapsing recording time: 100% equals the maximum of 30 seconds, a level meter and level adjustment helps during the recording process. After the recording the file can be checked by headphone or loudspeaker and saved. Additional recordings are possible. The user can apply the standard tools for editing the file: cut, adapt loudness etc.

To send out the file into the installation the installation itself has to be imported from the ADM. From that imported file the Announcement Manager will get the categories that are available as well as the areas (cells) the file can be sent to. The operator can make his choice as described above.

The receiver select unit RSU and/or the area select unit AS are used to decide if the announcement is sent out once or more often. To define this a user surface can be created to support this function where a date (calendar), clock and repeat function can be activated. In addition, a specific receiver, a group of receivers or a area can be selected for receiving the announcement. If a specific area is selected, all receivers within the selected area will receive the announcement.

The system will record the files that were sent out in the history unit HU with the file name under which the announcement was created, the date and the time. This can be done in a calendar where a marker shows days with an announcement. A click on that day will give details.

The pending announcement unit PAU is designed to indicate all pending announcements PAU. This may be implemented in form of a calendar, where the user can see the still pending announcements.

After sending out an announcement it may take up to one minute until the visitor can listen to that message.

An announcement can be available for certain period or as long as no other announcement is sent. So visitors that were out off range can also get that announcement. It needs to be checked which minimum availability for an announcement is needed; this needs to be set as standard, for that time no other announcement can be sent.

If the announcement is made available on a separate channel this channel should also be used as pager/information channel for the persons on duty. Those receivers for the employees will only react on announcements for them (special group) and will not play events.

The announcement managing unit ANM further comprises a muting activation unit MAU. If an announcement is to be sent to a specific receiver or area as selected using the receiver select unit RSU or the area select unit AS, the muting activation unit MAU outputs a muting activation signal for these receivers. When a receiver receives such a muting activation signal, the running program will be faded out so that higher ranking presentations can be started. This function can either be started through the Central PC or through an external signal.

At the end of the announcement a muting release signal may be transmitted either as part of the announcement or as a separate signal. Such a muting release signal brings the receiver back to normal operation: the user will hear audio signals again. Alternatively, the receiver may restart the audio program after a predetermined period of time has passed even if no muting release signal is received. This may be necessary to avoid a deadlock of the reproduction. The muting release signal can thus be omitted so that no transmission thereof is needed.

During the time where the receiver is silent the receiver will operate as usual, but no audio signal can be heard: downloads will go on or will be started while the visitor moves through the exhibition. Reset silence will start RTA sound, if required. If the receiver is standing in the range of an identifier, the audio file will start from the beginning. If an announcement is made while the silence mode is on, the announcement has priority.

During the time the announcement is running the receiver button 'Stop' has no function (will be ignored). The button Repeat will operate for the announcement as long as the announcement is available in a particular receiver: while the announcement runs. When the receiver has returned to the function before the announcement, the button 'Repeat' will refer to that event.

The announcement display unit ADU is designed to display all pending announcements, a list of the selected receivers, a list of the selected areas, and the status of the muting activation signal for the receivers and areas.

The receivers may comprise an internal piezo element that will probably be used as anti theft control but can also be activated when an announcement is on air. This function can be activated separately so that it can be used for the employees only. The piezo element can be activated when the download of the announcement is started so that there is time to set up the headphone before the announcement is audible.

The acoustic signal initiating unit ASI is designed to allow to play an acoustic signet during the download of a message or announcement, as the download of the message takes a certain time (up to 5 seconds) during which the visitor has to wait until he hears the message. This signet (3-4seconds) can be a standard one, which is delivered with the announcement managing unit ANM. The operator can exchange the delivered signet for his own one.

While above the details of the information system according to the second embodiment are described, now the details of the hand-held appliance 11 are described. In addition to the hand-held appliance of Fig. 2, the appliance according to the second embodiment comprises a muting control unit for controlling the muting and the release of the muting of the appliance upon receiving a muting activation signal or a muting release signal from the announcement managing unit AMN of the information system. When the muting control unit receives a muting activation signal, it mutes the running audio program and inhibits all button of the appliance 11, and when it receives the muting release signal the audio program may continue or may be started again and the button are released as well. In addition the hand-held appliance may comprise a button inhibit unit BIU for inhibiting the buttons in response to receiving a muting activation signal and for releasing said buttons in response to a muting release signal.

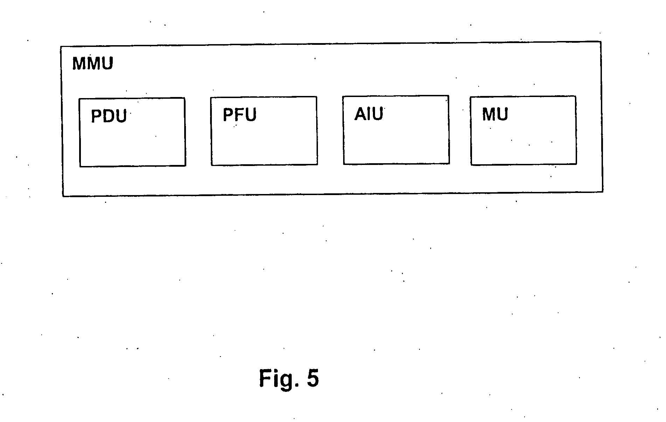

Fig. 5 shows a monitoring managing unit MMU as part of the information system according to a third embodiment. Said monitoring unit comprises a position determining unit PDU, a monitoring unit MU, a position forwarding unit PFU, and an alarm issuing unit AIU. The monitoring managing unit MMU is designed to give certain persons among a group of visitors, i.e. teachers, group leaders, patents or the like, the possibility identify the position of the other persons in the group and to monitor the movements of the other persons during their visit to an exhibition. Basically, the information system determines and monitors the position of the selected hand-held appliances. At least some of these positions are forwarded to the hand-held appliance of the group leader or in some specific predetermined cases an alarm message is forwarded to the hand-held appliance of the group leader.

During the hand out of the hand-held appliances, i.e. while a group enters the exhibition, the hand-held of the group leader is determined as a 'master' hand-held appliance and the hand-held appliances of the other group members are determined as 'slave' hand-held appliances. The IDs of the hand-held appliances are stored in the monitoring managing unit MMU. The positions of the selected hand-held appliances, i.e. the 'slave' appliances, are determined by the position determining unit PDU in regular time intervals. Alternatively or additionally the positions may be determined upon request. The determined positions are monitored by the monitoring unit MU. At regular intervals the positions of the selected appliances are forwarded to the positioning forwarding unit, which initiates the output of these position to the hand-held appliance of the group leader. If an alarm is to be issued when predetermined conditions are fulfilled, than the monitoring unit MU compares the determined positions of the selected hand-held appliances with the predetermined conditions. If at least one condition is fulfilled, a corresponding alarm message is forwarded to the alarm issuing unit AIU, which issues an alarm to the hand-held appliance of the group leader.

The predetermined conditions may relate to a hand-held appliance of the group leaving the exhibition grounds, several hand-held appliances of the group hang about at the same position longer than a predetermined time period, or the like.

The above features are particularly helpful for teachers when they are on an exhibition with their class, since it will allow them to observe whether all class members are still in the exhibition area or whether all class members really attend to at least some events. Since teachers have the duty of supervision after their class especially when they are outside the classroom like in an exhibition, it is a very helpful tool for them to have the ability to monitor the positions of the class members. The same may apply to parents when they visit an exhibition with their children. With the monitoring managing unit MMU the children may discover the exhibition on their own and the parents will always know where the children are. The monitoring managing unit MMN may also be helpful for a tour guide or tourist guide to monitor the positions of the tour group or tourist group or to ensure that nobody is left behind when leaving the exhibition.

The monitoring managing unit MMU may be regarded as a special case of the announcement manager, since a message or announcement is forwarded to a specific hand-held appliance. However the timing of the sending of the message is determined by the visitor himself.

In addition the 'master' hand-held appliance may request a specific predetermined announcement, like 'meet you all at the restaurant' or the like. This request will be handled by the announcement managing unit AMN and a corresponding announcement will be forwarded to the selected hand-held appliances.

In the third embodiment the position related information and the alarm messages are merely forwarded to the hand-held appliance of the group leader. However, alternatively or additionally selected positions or alarm messages may be forwarded to other selected hand-held appliances. This selection must be performed during the hand out procedure. While the 'master' hand-held appliance of the group leader receives all position information and alarm messages generated by the monitoring managing unit MMU, other hand-held appliances may only receive selected positions and selected alarm messages.

The monitoring managing unit MMU according to the third embodiment may be implemented in combination with the announcement managing unit AMN according to Fig. 3 within an information system as described with regards to Fig. 1 and/or with hand-held appliances as described in Fig. 2.

If, as mentioned above, appliances are each equipped with a transmission device which automatically emits identification pulses and corresponding reception devices pick up theses identification pulses and forward them for processing, the positions of the appliances may be stored in the position determining unit or in the monitoring unit and can be updated regularly.

Alternatively, to provide the positions of the hand-held appliances, the hand-held appliances may be provided with a RF-Tag, wherein a plurality of appropriate interrogators are provided within the exhibition for detecting RF-Tags within their ranges. The interrogators may linked to a central data processing system to forward the detected positions of the RF-Tags in the hand-held appliances for further processing.

The above described hand-held appliances may also comprise means for speech synthesis and/or speech recognition such that any information which is to be entered into the hand-held appliance or with is to be reproduced from the hand-held appliance.

In addition to the above-mentioned button, namely STOP, REPEAT, + (VOL+), - (VOL-) the hand-held appliances may comprise a further button which may be considered as a detail button. When this button is activated more details about the recognized event may be received, stored and reproduced. This is in particular advantageous if firstly a short text related to the recognized event is transmitted, stored and reproduced and the user may then decide himself whether he prefers a more detailed explanation about the recognized event. In such a case, pressing the detail button will initiate the transmission and reproduction of a more detailed and longer text.

Alternatively, this detail button may be used to select from several texts which may for example relate to explanations for children, for experts or the like. Thus, the basic functionality of the detail button will be to initiate a reproduction of information based on a different level, wherein this level may refer to the different intellectual level or to the different levels of interest. Alternatively, this may also relate to the different length of the reproduced information.

Optionally, the detail button may also be used to initiate the reproduction of explanations about what to do next or where to go next.

The detail button may also be used within the shopping function, the competition function or the questionnaire function as described according to Fig. 3. In particular, by pressing the detail button more detailed information regarding the item to be purchased, the particular question within the questionnaire or regarding the particular question within the competition is forwarded and reproduced.

According to a further embodiment, a tour through the exhibition may be selected before visiting the exhibition. Here, the selected information or the selected events which are to be visited can be stored in a profile which may be a personalized profile and which may be stored in the hand-held appliance. The visitor may select the profile himself or the profile may be selected by a third person like a teacher or a tour operator. The preselected tours may be selected according to the preferences of the user or may be selected according to specific information regarding to specific topics. In particular, all events relating to specific topics, for example like optics, may be preselected and stored in the profile. Thereafter, when the visitor is passing through the exhibition he will receive a personalized tour according to the preselected profile such that he only visits those events which are for example related to optics.

One parameter of the preselected profile may be the time which is available for visiting the exhibition. If for some reason there is less time available, then from the preselected events only those events are determined for which there is sufficient time present. The other events may be deleted or omitted. Accordingly, it is constantly or at predetermined time intervals determined whether there is sufficient time left to end the preselected tour and to visit all preselected events. If this is not the case anymore, then only a few from this preselected events are chosen for continuing the tour.

The invention described above can be used in a wide variety of fields, for example as an integrated guidance and information system for museums, trade fairs, leisure parks, general attractions and regions. It can also be used in translation installations, conference installations or search systems or else for assisting blind and partially-deaf people. The invention provides the user (visitor) with specific information which is primarily of an audio nature.

During the description above, the terms receiver and hand-held appliance were used alternately.

## Claims

1. Information system for supplying a prescribed region with information, having
- at least one transmission device (3) for transmitting information in digitally coded form,
- at least one hand-held appliance (11) comprising:
- a reception device (8) for receiving the information transmitted by the transmission device (3),
- a digital memory device (13) for storing the received information,
- a reproduction device (17, 18) for reproducing the stored information,
- an event recognition device (9) for recognizing particular events which, upon recognizing an event, selects from the stored information the information associated with the recognized event for the purpose of reproduction,
said hand-held appliance **characterised in that** it further comprises :
- a statistics managing unit (SMU) for accumulating and for managing data with regard to recognised events and the handling of said hand-held appliance (11) within the prescribed region, and
- an announcement managing unit (AMN) for sending announcements to selected hand-held appliances (11) within the prescribed region, wherein said reproduction device (17, 18) is adapted to reproduce said announcements.

2. Information system according to claim 1, wherein said statistics managing unit (SMU) comprises a visitor statistics unit (VSU) for generating a visitor profile according to recognised events and the handling of said hand-held appliance (11).

3. Information system according to claim 1 or 2, wherein said statistics managing unit (SMU) comprises an operator statistics unit (OSU) for generating an acceptance profile of events recognised by said hand-held appliance (11).

4. Information system according to claim 1, 2 or 3, wherein said statistics managing unit (SMU) comprises a technical statistics unit (TSU) for generating a system performance profile according to the recognised events and handling of said hand-held appliance (11).

5. Information system according to one of the preceding claims, wherein a position is keyed in manually or said event recognition device comprises a position-finding device for finding the current position, with the event for which the associated information is selected being arrival at a particular position.

6. Information system according to Claim 5, **characterized in that** the position-finding device receives position-finding signals which are emitted by signal generators arranged at prescribed positions in the region.

7. Information system according to Claim 2 or 3, wherein said statistics managing unit (SMU) further comprises a shopping function unit (SFU) for accumulating and managing data with regard to purchases in the prescribed region.

8. Information system according to Claim 2 or 3, wherein said statistics managing unit (SMU) further comprises a competition function unit (CFU) for accumulating and managing data with regard to competitions in the prescribed region.

9. Information system according to Claim 2 or 3, wherein said statistics managing unit (SMU) further comprises a questionnaire function unit (QFU) for accumulating and managing data with regard to purchases in the prescribed region.

10. Information system according to one of the preceding claims, comprising at least one hand-held read-out means for reading-out said data accumulated by the statistics managing unit (SMU).

11. Method for supplying a prescribed region with information, in which information in digitally coded form is transmitted by a transmission device (3) and is received by a reception device (8) contained in a hand-held appliance (11) and is stored in a digital memory device (13) in the hand-held appliance, where, upon recognition of an event, the information associated with the recognized event is selected from the stored information for the purpose of reproduction, and data with regard to recognised events and the handling of said hand-held appliance (11) within the prescribed region is accumulated and managed,
wherein announcements are sent to selected hand-held appliances (11) within the prescribed region, wherein the reproduction is adapted to reproduce the announcements.

12. Method according to Claim 11, **characterized in that** the information is transmitted from the transmission device to the reception device faster than subsequent reproduction by the reproduction device.

13. Method according to Claim 11 or 12, **characterized in that** the information is multilingual.

14. Method according to Claim 13, **characterized in that** one of the languages in which the information is transmitted is selected on the hand-held appliance.

15. Method according to Claim 14, **characterized in that** the memory device in the hand-held appliance stores only the information which is in the selected language and/or multi-language information.

16. Method according to one of Claims 11 to 15, **characterized in that** the event for which the associated information is selected is arrival at a particular position.

17. Method according to one of Claims 11 to 16, **characterized in that** information is transmitted with different priority identifiers, and information with a relatively high priority identifier, for example warnings, is reproduced with preference.

18. Hand-held appliance for receiving, storing and reproducing information in an information system according to one of Claims 1 to 10, having a reception device (8) for receiving digitally coded information, a digital memory device (13) for storing the received information, a reproduction device (17, 18) for reproducing the stored information, particularly audibly and/or 30 visually, and an event recognition device (9) for recognizing particular events which, upon recognizing an event, selects the information associated with the recognized event from the stored information for the purpose of reproduction, and accumulates and manages data with regard to recognised events and the handling of said hand-held appliance (11) within the prescribed region,
wherein said reproduction device is adapted to reproduce announcements sent to the hand-held device by the announcement managing unit (AMN).

19. Information system according to any one of claims 1 to 10, wherein said announcement managing unit (AMN) comprises a history unit (HU) for storing said announcements, the transmission time and - date, and the recipient.

20. Information system according to any one of claims 1 to 10 and 19, wherein said announcement managing unit (AMN) further comprises a pending announcement unit (PAU) for storing pending announcements and for forwarding a list of pending announcements.

21. Information system according to any one of claims 1 to 10 and 19 to 20,
wherein said announcement managing unit (AMN) comprises a muting activation unit (MAU) for outputting a muting activation signal and a muting release signal.

22. Information system according to any one of claims 1 to 10 and 19 to 21,
wherein said announcement managing unit (AMN) comprises a receiver select unit (RSU) for selecting at least one hand-held appliance to which said announcement is to be send to.

23. Information system according to any one of claims 19 to 22, wherein said announcement managing unit (AMN) comprises an area select unit (RSU) for selecting at least one area, wherein said announcement is sent to all hand-held appliances in the selected areas.

24. Information system for supplying a prescribed region with information according to any one of claims 1 to 10 and 19 to 23, having
- at least one transmission device (3) for transmitting information in digitally coded form,
- at least one hand-held appliance (11) comprising:
- a reception device (8) for receiving the information transmitted by the transmission device (3),
- a digital memory device (13) for storing the received information,
- a reproduction device (17, 18) for reproducing the stored information,
- an event recognition device (9) for recognizing particular events which, upon recognizing an event, selects from the stored information the information associated with the recognized event for the purpose of reproduction, and
- a monitoring managing unit (MMU) for monitoring the positions of at least one hand-held appliance (11) in said prescribed region according to predetermined conditions.

25. Information system according to claim 24, wherein said monitoring managing unit (MMU) comprises a position determining unit (PDU) for determining the positions of said at least one hand-held appliance (11).

26. Information system according to claim 25, wherein said monitoring managing unit (MMU) comprises a position forwarding unit (PFU) for forwarding the determined positions of said at least one hand-held appliance (11).

27. Information system according to claim 26, wherein said monitoring managing unit (MMU) comprises an alarm issuing unit (AIU) for issuing an alarm if the position of said least one hand-held appliance (11) is outside at least part of said prescribed region.

28. Information system according to claim 26 or 27, wherein said alarm issuing unit (AIU) for issuing an alarm if the positions of selected hand-held appliance (11) are within a predetermined area of said prescribed region.

## Patentansprüche

1. Informationssystem zum Versorgen eines vorgegebenen Gebietes mit Informationen, mit
- mindestens einer Sendevorrichtung (3) zum Senden von Informationen in digital codierter Form,
- mindestens einem Handgerät (11), welches aufweist:
- eine Empfangsvorrichtung (8) zum Empfangen der durch die Sendevorrichtung (3) gesendeten Informationen,
- eine digitale Speichervorrichtung (13) zum Speichern der empfangenen Informationen,
- eine Wiedergabevorrichtung (17, 18) zum Wiedergeben der gespeicherten Informationen,
- eine Ereignis-Erkennungsvorrichtung (9) zum Erkennen von bestimmten Ereignissen, wobei bei Erkennen des Ereignisses aus den gespeicherten Informationen diejenigen Informationen für die Wiedergabe auswählt werden, welche dem erkannten Ereignis zugeordnet sind,
- das Handgerät ist ferner **gekennzeichnet durch**
- eine Statistik-Managementeinheit (SMU) zum Sammeln und Managen von Daten hinsichtlich der erkannten Ereignisse und der Handhabung des Handgeräts innerhalb des vorbestimmten Bereiches, und
- eine Durchsage-Managementeinheit (AMN) zum Senden von Durchsagen an ausgewählte Handgeräte (11) innerhalb des vorbestimmten Bereiches, wobei die Wiedergabevorrichtung (17, 18) dazu ausgestaltet ist, die Durchsagen wiederzugeben.

2. Informationssystem nach Anspruch 1, wobei die Statistik-Managementeinheit (SMU) eine Besucherstatistikeinheit (VSU) zum Erzeugen eines Besucherprofils gemäß den erkannten Ereignissen und der Handhabung des Handgeräts (11) aufweist.

3. Informationssystem nach Anspruch 1 oder 2, wobei die Statistik-Managementeinheit (SMU) eine Betreiberstatistikeinheit (OSU) zum Erzeugen eines Annahmeprofils von Ereignissen aufweist, welche durch das Handgerät (11) erkannt wurden.

4. Informationssystem nach Anspruch 1, 2 oder 3, wobei die Statistik-Managementeinheit (SMU) eine Technik-Statistikeinheit (TSU) zum Erzeugen eines Systemperformanceprofils gemäß den erfassten Ereignissen und der Handhabung des Handgeräts (11) aufweist.

5. Informationssystem nach einem der vorherigen Ansprüche, wobei eine Position manuell eingegeben wird oder die Ereignis-Erkennungsvorrichtung eine Positionsbestimmungsvorrichtung zum Bestimmen der aktuellen Position aufweist, wobei das Ereignis, für welches die zugeordneten Informationen ausgewählt werden, das Erreichen einer bestimmten Position darstellt.

6. Informationssystem nach Anspruch 5, **dadurch gekennzeichnet, dass** die Positionsbestimmungsvorrichtung Positionsbestimmungssignale empfängt, welche durch Signalgeneratoren erzeugt werden, die an vorbestimmten Positionen in dem Gebiet angeordnet sind.

7. Informationssystem nach Anspruch 2 oder 3, wobei die Statistik-Managementeinheit (SMU) ferner eine Einkaufsfunktionseinheit (SFU) zum Sammeln und Managen von Daten hinsichtlich der Einkäufe in dem vorgegebenen Gebiet aufweist.

8. Informationssystem nach Anspruch 2 oder 3, wobei die Statistik-Managementeinheit (SMU) ferner eine Wettbewerb-Funktionseinheit (CFU) zum Sammeln und Managen von Daten hinsichtlich Wettbewerben in dem vorgegebenen Gebiet aufweist.

9. Informationssystem nach Anspruch 2 oder 3, wobei die Statistik-Managementeinheit (SMU) ferner eine Umfragen-Funktionseinheit (QFU) zum Sammeln und Managen von Daten hinsichtlich der Einkäufe in dem vorgegebenen Gebiet aufweist.

10. Informationssystem nach einem der vorherigen Ansprüche, mit mindestens einem Handgerät-Auslesemittel zum Auslesen der durch die Statistik-Managementeinheit (SMU) gesammelten Daten.

11. Verfahren zum Versorgen eines vorgegebenen Gebietes mit Informationen,
wobei die Informationen in digital codierter Form durch eine Sendevorrichtung (3) gesendet werden und durch eine Empfangsvorrichtung (8) empfangen werden, welche in einem Handgerät (11) enthalten ist, und wobei die Informationen in einer digitalen Speichervorrichtung (13) in dem Handgerät gespeichert werden,
wobei beim Erfassen eines Ereignisses Informationen, welche dem erfassten Ereignis zugeordnet sind, aus den gespeicherten Informationen für die Wiedergabe ausgewählt werden, wobei Daten hinsichtlich der erfassten Ereignisse und der Handhabung des Handgerätes (11) in dem vorgegebenen Gebiet erfasst und gemanagt werden,
wobei Durchsagen an ausgewählte Handgeräte (11) in dem vorgegebenen Gebiet gesendet werden, wobei die Wiedergabe zur Wiedergabe der Durchsagen ausgestaltet ist.

12. Verfahren nach Anspruch 11, **dadurch gekennzeichnet, dass** die Informationen von der Sendevorrichtung an die Empfangsvorrichtung schneller als eine nachfolgende Wiedergabe durch die Wiedergabevorrichtung erfolgen.

13. Verfahren nach Anspruch 11 oder 12, **dadurch gekennzeichnet, dass** die Informationen mehrsprachig sind.

14. Verfahren nach Anspruch 13, **dadurch gekennzeichnet, dass** die Sprachen, in denen die Informationen übertragen werden, von dem Handgerät ausgewählt werden.

15. Verfahren nach Anspruch 14, **dadurch gekennzeichnet, dass** die Speichervorrichtung in dem Handgerät lediglich Informationen in der ausgewählten Sprache und/oder mehrsprachige Informationen speichert.

16. Verfahren nach einem der Ansprüche 11 bis 15, **dadurch gekennzeichnet, dass** das Ereignis, für welches die zugeordneten Informationen ausgewählt werden, ein Erreichen einer bestimmten Position darstellt.

17. Verfahren nach einem der Ansprüche 11 bis 16, **dadurch gekennzeichnet, dass** Informationen mit unterschiedlichen Prioritätskennungen übertragen werden und Informationen mit relativ hohen Prioritätskennungen, beispielsweise Warnungen, bevorzugt wiedergegeben werden.

18. Handgerät zum Empfangen, Speichern und Wiedergeben von Informationen in einem Informationssystem nach einem der Ansprüche 1 bis 10, mit einer Empfangsvorrichtung (8) zum Empfangen digital codierter Informationen, einer digitalen Speichervorrichtung (13) zum Speichern der empfangenen Informationen, einer Wiedergabevorrichtung (17, 18) zum Wiedergeben der gespeicherten Informationen, insbesondere hörbar und/oder visuell, und einer Ereignis-Erkennungsvorrichtung (9) zum Erkennen bestimmter Ereignisse, wobei beim Erkennen eines Ereignisses diejenigen Informationen für die Wiedergabe auswählt werden, die dem erkannten Ereignis zugeordnet sind, und wobei Daten hinsichtlich der erkannten Ereignisse und der Handhabung des Handgerätes (11) innerhalb des vorgegebenen Gebiets gesammelt und gemanagt werden,
wobei die Wiedergabevorrichtung dazu ausgestaltet ist, Durchsagen wiederzugeben, welche an das Handgerät durch die Durchsagen-Managementeinheit (AMN) gesendet werden.

19. Informationssystem nach einem der Ansprüche 1 bis 10, wobei die Durchsagen-Managementeinheit (AMN) eine Geschichtseinheit (HU) zum Speichern der Durchsagen, des Übertragungszeitpunktes und des Übertragungsdatums sowie des Empfängers aufweist.

20. Informationssystem nach einem der Ansprüche 1 bis 10 und 19, wobei die Durchsagen-Managementeinheit (AMN) ferner eine Einheit für ausstehende Durchsagen (PAU) zum Speichern von ausstehenden Durchsagen und zum Weiterreichen einer Liste von ausstehenden Durchsagen aufweist.

21. Informationssystem nach einem der Ansprüche 1 bis 10 und 19 bis 20, wobei die Durchsagen-Managementeinheit (AMN) eine Stummschaltung-Aktivierungseinheit (MAU) zum Ausgeben eines Stummschaltungs-Aktivierungssignals und eines Stummschaltungs-Befreiungssignals aufweist.

22. Informationssystem nach einem der Ansprüche 1 bis 10 und 19 bis 21, wobei die Durchsagen-Managementeinheit (AMN) eine Empfängerauswahleinheit (RSU) zum Auswählen mindestens eines Handgeräts aufweist, an welches die Durchsage zu senden ist.

23. Informationssystem nach einem der Ansprüche 19 bis 22, wobei die Durchsagen-Managementeinheit (AMN) eine Bereichsauswahleinheit (RSU) zum Auswählen zumindest eines Bereichs aufweist, wobei die Durchsagen an alle Handgeräte in dem ausgewählten Bereich gesendet werden.

24. Informationssystem zum Versorgen eines vorgegebenen Gebiets mit Informationen nach einem der Ansprüche 1 bis 10 und 19 bis 23, mit
- mindestens einer Sendevorrichtung (3) zum Senden von Informationen in digital codierter Form,
- mindestens einem Handgerät (11), welches aufweist:
- eine Empfangsvorrichtung (8) zum Empfangen von Informationen, die durch die Sendevorrichtung (3) gesendet werden,
- eine digitale Speichervorrichtung (13) zum Speichern der empfangenen Informationen,
- eine Wiedergabevorrichtung (17, 18) zum Wiedergeben der gespeicherten Informationen,
- eine Ereignis-Erkennungsvorrichtung (9) zum Erkennen von bestimmten Ereignissen, wobei beim Erkennen eines Ereignisses aus den gespeicherten Informationen für die Wiedergabe diejenigen Informationen ausgewählt werden, welche den erkannten Ereignissen zugeordnet sind, und
- eine Überwachungs-Managementeinheit (MMU) zum Überwachen der Positionen von mindestens einem Handgerät (11) in dem vorgegebenen Gebiet gemäß vorbestimmten Bedingungen.

25. Informationssystem nach Anspruch 24, wobei die Überwachungs-Managementeinheit (MMU) eine Positionsbestimmungseinheit (PDU) zum Bestimmen der Positionen des mindestens einen Handgeräts (11) aufweist.

26. Informationssystem nach Anspruch 25, wobei die Überwachungs-Managementeinheit (MMU) eine Positions-Weitergabeeinheit (PFU) zum Weitergeben der erfassten Positionen des mindestens einen Handgeräts (11) aufweist.

27. Informationssystem nach Anspruch 26, wobei die Überwachungs-Managementeinheit (MMU) eine Alarm-Ausgabeeinheit (AIU) zum Ausgeben eines Alarms aufweist, wenn die Position zumindest eines Handgeräts (11) außerhalb zumindest eines Teils des vorgegebenen Gebietes ist.

28. Informationssystem nach Anspruch 26 oder 27, wobei die Alarmausgabeeinheit (AIU) zum Ausgeben eines Alarms ausgestaltet ist, wenn die Positionen der ausgewählten Handgeräte (11) innerhalb eines vorgegebenen Bereichs des vorgegebenen Gebietes sind.

## Revendications

1. Système d'informations pour fournir des informations à une région prescrite, ayant :
- au moins un dispositif de transmission (3) pour transmettre des informations codées sous forme numérique,
- au moins un appareil portatif (11) comprenant :
- un dispositif de réception (8) pour recevoir les informations transmises par le dispositif de transmission (3),
- un dispositif de mémoire numérique (13) pour mémoriser les informations reçues,
- un dispositif de reproduction (17, 18) pour reproduire les informations mémorisées,
- un dispositif de reconnaissance d'événements (9) pour reconnaître des événements particuliers qui, à la reconnaissance d'un événement, sélectionne parmi les informations mémorisées les informations associées à l'événement reconnu à des fins de reproduction,
ledit appareil portatif étant **caractérisé en ce qu'**il comprend en outre :
- une unité de gestion de statistiques (SMU) pour accumuler et gérer des données en ce qui concerne des événements reconnus et la prise en charge dudit appareil portatif (11) à l'intérieur de la région prescrite, et
- une unité de gestion d'annonce (AMN) pour envoyer des annonces à des appareils portatifs sélectionnés (11) à l'intérieur de la région prescrite, ledit dispositif de reproduction (17, 18) étant apte à reproduire lesdites annonces.

2. Système d'informations selon la revendication 1, **caractérisé en ce que** ladite unité de gestion de statistiques (SMU) comprend une unité de statistiques de visiteur (VSU) pour générer un profil de visiteur en fonction des événements reconnus et de la prise en charge dudit appareil portatif (11).

3. Système d'informations selon la revendication 1 ou 2, **caractérisé en ce que** ladite unité de gestion de statistiques (SMU) comprend une unité de statistiques d'opérateur (OSU) pour générer un profil d'acceptation d'événements reconnus par ledit appareil portatif (11).

4. Système d'informations selon la revendication 1, 2 ou 3, **caractérisé en ce que** ladite unité de gestion de statistiques (SMU) comprend une unité de statistiques techniques (TSU) pour générer un profil de performances de système en fonction des événements reconnus et de la prise en charge dudit appareil portatif (11).

5. Système d'informations selon l'une quelconque des revendications précédentes, **caractérisé en ce qu'**une position est saisie manuellement ou que ledit dispositif de reconnaissance d'événements comprend un dispositif de recherche de position pour trouver la position actuelle, l'événement pour lequel les informations associées sont sélectionnées étant l'arrivée à une position particulière.

6. Système d'informations selon la revendication 5, **caractérisé en ce que** le dispositif de recherche de position reçoit des signaux de recherche de position qui sont émis par des générateurs de signaux agencés à des positions prescrites dans la région.

7. Système d'informations selon la revendication 2 ou 3, **caractérisé en ce que** ladite unité de gestion de statistiques (SMU) comprend en outre une unité de fonction d'achats (SFU) pour accumuler et gérer des données en ce qui concerne des achats dans la région prescrite.

8. Système d'informations selon la revendication 2 ou 3, **caractérisé en ce que** ladite unité de gestion de statistiques (SMU) comprend en outre une unité de fonction de compétition (CFU) pour accumuler et gérer des données en ce qui concerne des compétitions dans la région prescrite.

9. Système d'informations selon la revendication 2 ou 3, **caractérisé en ce que** ladite unité de gestion de statistiques (SMU) comprend en outre une unité de fonction de questionnaires (QFU) pour accumuler et gérer des données en ce qui concerne des achats dans la région prescrite.

10. Système d'informations selon l'une quelconque des revendications précédentes, **caractérisé en ce qu'**il comprend au moins un moyen de lecture portatif pour lire lesdites données accumulées par l'unité de gestion de statistiques (SMU).

11. Procédé pour fournir des informations à une région prescrite, dans lequel des informations codées sous forme numérique sont transmises par un dispositif de transmission (3) et sont reçues par un dispositif de réception (8) contenu dans un appareil portatif (11) et sont mémorisées dans un dispositif de mémoire numérique (13) dans l'appareil portatif, où, à la reconnaissance d'un événement, les informations associées à l'événement reconnu sont sélectionnées parmi les informations mémorisées à des fins de reproduction, et les données en ce qui concerne des événements reconnus et la prise en charge dudit appareil portatif (11) à l'intérieur de la région prescrite sont accumulées et gérées,
**caractérisé en ce que** des annonces sont envoyées à des appareils portatifs sélectionnés (11) à l'intérieur de la région prescrite, dans lequel la reproduction est apte à reproduire les annonces.

12. Procédé selon la revendication 11, **caractérisé en ce que** les informations sont transmises du dispositif de transmission au dispositif de réception plus vite que la reproduction subséquente par le dispositif de reproduction.

13. Procédé selon la revendication 11 ou 12, **caractérisé en ce que** les informations sont multilingues.

14. Procédé selon la revendication 13, **caractérisé en ce que** l'une des langues dans lesquelles les informations sont transmises est sélectionnée sur l'appareil portatif.

15. Procédé selon la revendication 14, **caractérisé en ce que** le dispositif de mémoire dans l'appareil portatif mémorise uniquement les informations qui sont dans la langue sélectionnée et/ou les informations multilingues.

16. Procédé selon l'une quelconque des revendications 11 à 15, **caractérisé en ce que** l'événement pour lequel les informations associées sont sélectionnées est l'arrivée à une position particulière.

17. Procédé selon l'une quelconque des revendications 11 à 16, **caractérisé en ce que** les informations sont transmises avec des identifiants de priorité différents, et les informations avec un identifiant de priorité relativement haute, par exemple des avertissements, sont reproduites de préférence.

18. Appareil portatif pour recevoir, mémoriser et reproduire des informations dans un système d'informations selon l'une quelconque des revendications 1 à 10, ayant un dispositif de réception (8) pour recevoir des informations codées numériquement, un dispositif de mémoire numérique (13) pour mémoriser les informations reçues, un dispositif de reproduction (17, 18) pour reproduire les informations mémorisées, particulièrement de manière audible et/ou visuelle, et un dispositif de reconnaissance d'événements (9) pour reconnaître des événements particuliers qui, à la reconnaissance d'un événement, sélectionne les informations associées à l'événement reconnu parmi les informations mémorisées à des fins de reproduction, et accumule et gère des données en ce qui concerne des événements reconnus et la prise en charge dudit appareil portatif (11) à l'intérieur de la région prescrite,
**caractérisé en ce que** ledit dispositif de reproduction est apte à reproduire des annonces envoyées au dispositif portatif par l'unité de gestion d'annonces (AMN).

19. Système d'informations selon l'une quelconque des revendications 1 à 10, **caractérisé en ce que** ladite unité de gestion d'annonces (AMN) comprend une unité d'historique (HU) pour mémoriser lesdites annonces, l'heure et la date de transmission, et le destinataire.

20. Système d'informations selon l'une quelconque des revendications 1 à 10 et 19, **caractérisé en ce que** ladite unité de gestion d'annonces (AMN) comprend en outre une unité d'annonces en attente (PAU) pour mémoriser les annonces en attente et pour transférer une liste d'annonces en entente.

21. Système d'informations selon l'une quelconque des revendications 1 à 10 et 19 à 20, **caractérisé en ce que** ladite unité de gestion d'annonces (AMN) comprend une unité d'activation de silencieux (MAU) pour délivrer un signal d'activation de silencieux et un signal de désactivation de silencieux.

22. Système d'informations selon l'une quelconque des revendications 1 à 10 et 19 à 21, **caractérisé en ce que** ladite unité de gestion d'annonces (AMN) comprend une unité de sélection de récepteur (RSU) pour sélectionner au moins un appareil portatif auquel ladite annonce doit être envoyée.

23. Système d'informations selon l'une quelconque des revendications 19 à 22, **caractérisé en ce que** ladite unité de gestion d'annonces (AMN) comprend une unité de sélection de zone (RSU) pour sélectionner au moins une zone, dans lequel ladite annonce est envoyée à tous les appareils portatifs dans les zones sélectionnées.

24. Système d'informations pour fournir des informations à une région prescrite selon l'une quelconque des revendications 1 à 10 et 19 à 23, **caractérisé en ce qu'**il comprend :
- au moins un dispositif de transmission (3) pour transmettre des informations codées sous forme numérique,
- au moins un appareil portatif (11) comprenant :
- un dispositif de réception (8) pour recevoir les informations transmises par le dispositif de transmission (3),
- un dispositif de mémoire numérique (13) pour mémoriser les informations reçues,
- un dispositif de reproduction (17, 18) pour reproduire les informations mémorisées,
- un dispositif de reconnaissance d'événements (9) pour reconnaître des événements particuliers qui, à la reconnaissance d'un événement, sélectionne parmi les informations mémorisées les informations associées à l'événement reconnu à des fins de reproduction, et
- une unité de gestion de surveillance (MMU) pour surveiller les positions d'au moins un appareil portatif (11) dans ladite région prescrite en fonction de conditions prédéterminées.

25. Système d'informations selon la revendication 24, **caractérisé en ce que** ladite unité de gestion de surveillance (MMU) comprend une unité de détermination de position (PDU) pour déterminer les positions dudit au moins un appareil portatif (11).

26. Système d'informations selon la revendication 25, **caractérisé en ce que** ladite unité de gestion de surveillance (MMU) comprend une unité de transfert de position (PFU) pour transférer les positions déterminées dudit au moins un appareil portatif (11).

27. Système d'informations selon la revendication 26, **caractérisé en ce que** ladite unité de gestion de surveillance (MMU) comprend une unité d'émission d'alarme (AIU) pour émettre une alarme si la position dudit au moins un appareil portatif (11) est à l'extérieur d'au moins une partie de ladite région prescrite.

28. Système d'informations selon la revendication 26 ou 27, **caractérisé en ce que** ladite unité d'émission d'alarme (AIU) est destinée à émettre une alarme si les positions de l'appareil portatif sélectionné (11) sont à l'intérieur d'une zone prédéterminée de ladite région prescrite.
